# EUROPEAN PATENT SPECIFICATION

(11) **EP 4 303 428 B1**
(45) Date of publication and mention of the grant of the patent: **04.06.2025**
(21) Application number: 23182449.1
(22) Date of filing: 29.06.2023
(51) Int. Cl.: F02M 21/02, B60K 15/03, B60K 15/035, F17C 13/00

(54) **HYDROGEN ENGINE VEHICLE WITH LIQUID HYDROGEN STORAGE SYSTEM**
WASSERSTOFFMOTORFAHRZEUG MIT SYSTEM ZUR SPEICHERUNG VON FLÜSSIGEM WASSERSTOFF
VÉHICULE À MOTEUR À HYDROGÈNE AVEC SYSTÈME DE STOCKAGE D'HYDROGÈNE LIQUIDE

(30) Priority: 04.07.2022 JP 2022107581
(43) Date of publication of application: 10.01.2024
(73) Proprietor: TOYOTA JIDOSHA KABUSHIKI KAISHA, Toyota-shi, Aichi-ken, 471 8571 (JP)
(72) Inventor: ITO, Naoaki, Toyota-shi, 471-8571 (JP)
(74) Representative: J A Kemp LLP

(56) References cited:
- DE-A1- 102020 207 253
- JP-A- 2002 106 798
- JP-A- 2003 201 921
- US-A- 4 386 309
- US-A1- 2002 092 562
- US-A1- 2005 224 514
- US-A1- 2021 372 350

## Description

### TECHNICAL FIELD

The present specification discloses a system for storing liquid hydrogen in a vehicle.

### BACKGROUND

It has conventionally been proposed to store hydrogen in a liquid state as is in a vehicle (such as a fuel cell electric vehicle or a hydrogen engine vehicle) that uses hydrogen as an energy source. For example, a liquid hydrogen storage device in which a liquid hydrogen storage tank is provided in a vacuum tank is disclosed in PATENT DOCUMENT 1.

Here, when liquid hydrogen is vaporized to produce a large amount of hydrogen gas in the liquid hydrogen storage tank, an internal tank pressure is increased excessively. In order to suppress such a pressure increase, in PATENT DOCUMENT 1, a hydrogen storage tank is provided with a discharge pipe, through which the hydrogen gas is discharged to the outside, and the discharge pipe is provided with an open valve and a safety valve in parallel. The open valve is opened at a predetermined first working pressure, and the safety valve is opened at a second working pressure that is higher than the first working pressure. With such a configuration, it is possible to suppress the excessive increase in the internal tank pressure to a certain extent.

However, in PATENT DOCUMENT 1, processing of the hydrogen gas, which is discharged to the outside from the open valve and the safety valve, has not been sufficiently considered. PATENT DOCUMENT 2 discloses another configuration with a plurality of safety valves in parallel. However, there is still room for improvement in ensuring safety in a case where liquid hydrogen is stored in the vehicle.

In view of the above, the present specification discloses a liquid hydrogen storage system capable of storing liquid hydrogen further safely in a vehicle.

JP 2002106798A discloses a liquid hydrogen storage device.

### CITATION LIST

PATENT DOCUMENT 1: JP 2002-106794 A
PATENT DOCUMENT 2: US 2005/224514 A1

### SUMMARY

The invention is as defined in claim 1. Further aspects and preferred embodiments are defined in the dependent claims.

A hydrogen engine vehicle comprising a liquid hydrogen storage system disclosed in the present specification includes: a hydrogen tank that stores liquid hydrogen in a vehicle; a first channel that communicates between the hydrogen tank and the outside of the vehicle; a reaction section that causes hydrogen gas flowing through the first channel to react with oxygen for conversion into water and then discharges water to the outside of the vehicle through the first channel; and a first safety valve that is provided between the hydrogen tank and the reaction section, and is opened at the time when an internal tank pressure as an internal pressure of the hydrogen tank exceeds a first open reference value, so as to discharge the hydrogen gas in the hydrogen tank to the reaction section.

With such a configuration, it is possible to safely discharge the hydrogen gas to the outside of the vehicle while suppressing an increase in the internal tank pressure. As a result, liquid hydrogen can be stored further safely in the vehicle.

In this case, the first safety valve may be closed when the internal tank pressure becomes equal to or lower than a first close reference value. The first close reference value may be equal to or lower than the first open reference value.

With such a configuration, it is possible to prevent the hydrogen gas in the tank from being discharged to the outside excessively.

The liquid hydrogen storage system further includes: a second channel that communicates between the hydrogen tank and the outside of the vehicle; and a second safety valve that is provided in an intermediate portion of the second channel, and is opened at the time when the internal tank pressure exceeds a second open reference value, so as to discharge the hydrogen gas in the hydrogen tank to the outside of the vehicle via the second channel. The second channel directs the hydrogen gas to an upper portion or a rear portion of the vehicle via a route that avoids a high-temperature area in the vehicle, and may discharge the hydrogen gas in a gaseous state as is to the outside of the vehicle. The second open reference value is higher than the first open reference value.

With such a configuration, it is possible to further reliably prevent the internal tank pressure from becoming excessively high. In addition, since the hydrogen gas is discharged to the outside of the vehicle via the route that avoids the high-temperature area, it is possible to further reliably ensure safety of an occupant.

In this case, the second safety valve may be closed when the internal tank pressure becomes equal to or lower than a second close reference value, and the second close reference value may be equal to or lower than the second open reference value.

With such a configuration, it is possible to prevent the hydrogen gas in the tank from being discharged to the outside excessively.

In this case, the liquid hydrogen storage system may further include an alarm that outputs a warning when the second safety valve is opened.

With such a configuration, the occupant can recognize occurrence of abnormality to the hydrogen tank and thus can evacuate the vehicle when necessary. As a result, the safety of the occupant can further reliably be ensured.

The liquid hydrogen storage system further includes: a third channel that communicates between the hydrogen tank and the outside of the vehicle; and a closure member that is provided in an intermediate portion of the third channel to prohibit the hydrogen gas from flowing therethrough, the closure member being destroyed at the time when the internal pressure of the hydrogen tank exceeds a third reference value that is higher than the second open reference value, so as to allow the hydrogen gas to flow therethrough. The third channel directs the hydrogen gas to the upper portion or the rear portion of the vehicle via the route that avoids the high-temperature area in the vehicle, and discharges the hydrogen gas in the gaseous state as is to the outside of the vehicle.

Due to provision of the closure member that is destroyed by the pressure exceeding the third reference value, even in the case where electrical failure occurs, the hydrogen gas can be discharged to the outside of the tank at the time when the internal tank pressure exceeds and becomes much higher than the third reference value. As a result, it is possible to prevent the internal tank pressure from becoming excessively high and to further reliably ensure the safety of the occupant.

In this case, each of the first channel, the second channel, and the third channel may extend toward the outside of the vehicle from vicinity of an upper end of the hydrogen tank in a direction of gravity.

With such a configuration, even in the case where the vehicle and thus a liquid surface in the hydrogen tank are tilted, inlets of the first channel, the second channel, and the third channel are prevented from being filled with liquid hydrogen. Accordingly, the hydrogen gas can appropriately be discharged from the first channel, the second channel, and the third channel according to the internal tank pressure.

The liquid hydrogen storage system further includes a pump that pressurizes the liquid hydrogen stored in the hydrogen tank and outputs the pressurized liquid hydrogen to the hydrogen engine.

Just as described, it is configured to pressurize liquid hydrogen at the time of taking out liquid hydrogen. Thus, it is possible to suppress the pressure of liquid hydrogen stored in the hydrogen tank to a low value. In this way, it is possible to suppress a maximum allowable pressure of the hydrogen tank itself to a low value and thus to reduce cost associated with the hydrogen tank.

According to the liquid hydrogen storage system disclosed in the present specification, it is possible to store liquid hydrogen further safely in the vehicle.

### BRIEF DESCRIPTION OF DRAWINGS

Embodiment(s) of the present disclosure will be described based on the following figures, wherein:
FIG. 1 is a schematic view illustrating a configuration of a liquid hydrogen storage system;
FIG. 2 is a perspective view of a hydrogen tank; and
FIG. 3 is a flowchart illustrating processing to manage an internal tank pressure.

### DESCRIPTION OF EMBODIMENTS

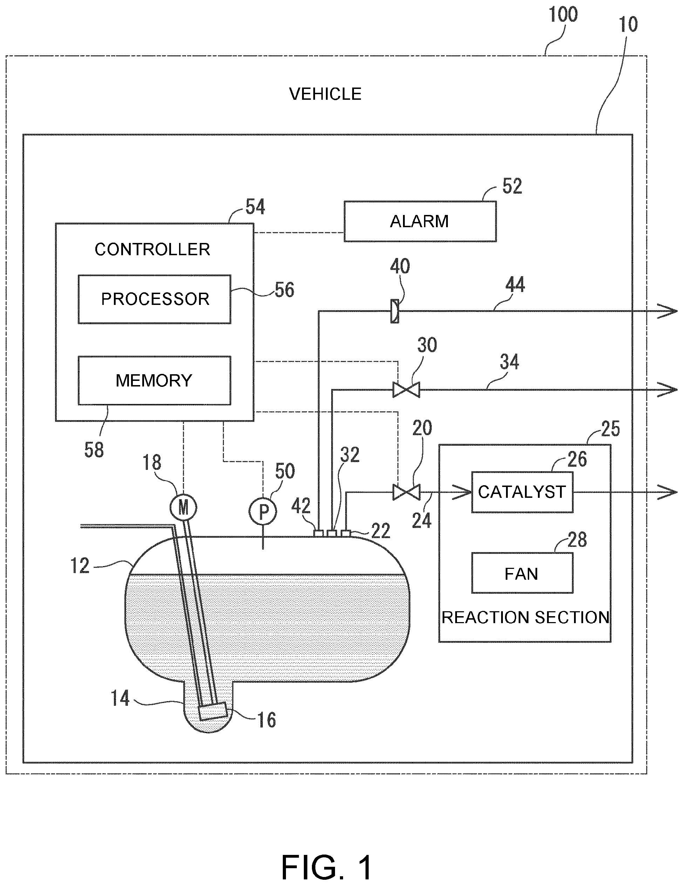

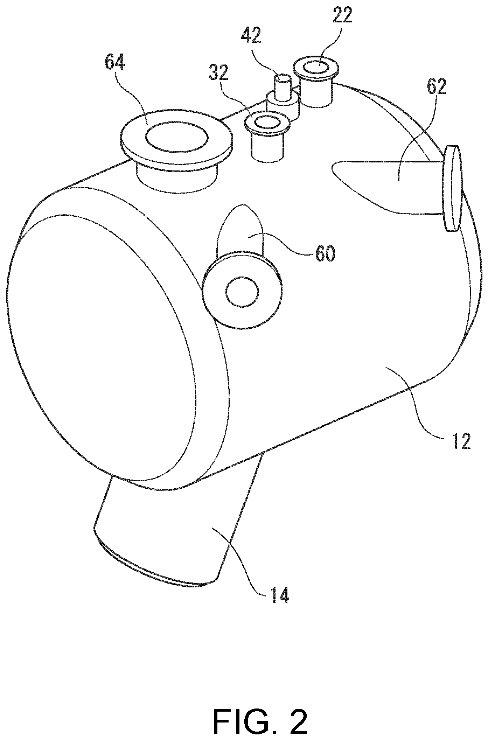

A description will hereinafter be made on a configuration of a liquid hydrogen storage system 10 with reference to the drawings. FIG. 1 is a schematic view illustrating the configuration of the liquid hydrogen storage system 10. FIG. 2 is a perspective view of a hydrogen tank 12.

The liquid hydrogen storage system 10 is mounted to a vehicle 100 and stores hydrogen in a liquid state. The vehicle 100 is a hydrogen engine vehicle that uses hydrogen as an energy source. Other examples of a vehicle are a fuel cell electric vehicle (not according to the invention). A description will hereinafter be made on the liquid hydrogen storage system 10, which is suited for the hydrogen engine vehicle. In the hydrogen engine vehicle, a direct-injection hydrogen engine (not illustrated) that injects hydrogen gas directly into an engine cylinder is mounted.

The liquid hydrogen storage system 10 has the hydrogen tank 12 that stores liquid hydrogen. The hydrogen tank 12 insulates and stores liquid hydrogen. For example, a container with a double-pipe structure can be used as such a hydrogen tank 12. In such a container, a vacuum heat-insulation layer is provided between an inner tank formed of SUS and an outer tank covering the inner tank. In order to keep a pressure that is applied to an inner wall uniformly, the hydrogen tank 12 has a spherical shape or a sandbag shape as illustrated in FIG. 2.

In the hydrogen tank 12, liquid hydrogen is maintained at low temperature. In the hydrogen tank 12, a pressure of liquid hydrogen is substantially the same as the atmospheric pressure. The hydrogen tank 12 is provided with a pump 16 that pumps stored liquid hydrogen and feeds liquid hydrogen to the hydrogen engine side. This pump 16 is a booster pump that pumps liquid hydrogen while pressurizing liquid hydrogen. This pump 16 is driven by a pump motor 18. By providing the pump 16 that has such a boosting function, it is possible to lower pressure resistance performance required for the hydrogen tank 12 and thereby reduce cost associated with the hydrogen tank 12.

That is, as described above, in this embodiment, the hydrogen engine is of a direct injection type in which the hydrogen gas is directly injected into the engine cylinder. The hydrogen gas to be directly injected has to be at a drastically higher pressure (for example, 5 MPa to several tens of MPa, or the like) than the atmospheric pressure. In order to obtain such high-pressure hydrogen gas, the pressure of hydrogen has to be sufficiently high before vaporization; that is, in the liquid state. Thus, there is also considered storing liquid hydrogen at the high-pressure (for example, several tens of MPa) in the hydrogen tank 12. However, in this case, the pressure resistance performance of the hydrogen tank 12 has to be improved, which increases the cost associated with the hydrogen tank 12 and increases weight of the hydrogen tank 12.

Meanwhile, in this embodiment, the pressure of liquid hydrogen in the hydrogen tank 12 is set to a pressure that is substantially the same as the atmospheric pressure. When liquid hydrogen is vaporized, only an amount of liquid hydrogen that is required for the vaporization is taken out by the pump 16 after the pressure thereof is sufficiently increased. With such a configuration, it is possible to obtain the hydrogen gas at the sufficiently high pressure while suppressing the pressure resistance performance of the hydrogen tank 12 to be low.

A collector 14 that is depressed from a surrounding area is provided to a bottom surface of the hydrogen tank 12. The pump 16 is arranged in this collector 14. With such a configuration, even when a remaining amount of liquid hydrogen becomes small, it is possible to position the pump 16 in the liquid and thus to pump liquid hydrogen to a last drop.

As illustrated in FIG. 2, a liquid hydrogen fill port 60 and a hydrogen gas return port 62 are formed in a lateral portion of the hydrogen tank 12. The liquid hydrogen fill port 60 is a port that accepts a supply of liquid hydrogen from the outside. The hydrogen gas return port 62 is a port that suctions the hydrogen gas vaporized by natural heat input (so-called boil-off gas) from the outside during filling of liquid hydrogen and discharges the hydrogen gas to the outside. In order to appropriately suction the boil-off gas, a surface level of liquid hydrogen at the time of full filling is lower than this hydrogen gas return port 62. In other words, in this embodiment, an internal volume of the hydrogen tank 12 is larger than a volume of liquid hydrogen at the time of full filling. For this reason, in an upper portion of the hydrogen tank 12, there is always a space of a predetermined volume or larger (hereinafter referred to as an "upper space"). In this upper space, the hydrogen gas, which is produced by the vaporization of liquid hydrogen stored in the tank, is accumulated. The hydrogen tank 12 is provided with a pressure sensor 50 that detects a pressure in this upper space as an internal tank pressure Pt. A detection value obtained by the pressure sensor 50 is sent to a controller 54.

In addition, as illustrated in FIG. 2, a pump port 64, a first port 22, a second port 32, and a third port 42 are formed near a top of the hydrogen tank 12; that is, near an upper end of the hydrogen tank 12 in a direction of gravity. By providing the first port 22, the second port 32, and the third port 42 near the upper end in the direction of gravity, these ports 22, 32, 42 are less likely to be filled with the liquid even when the vehicle 100 and thus the surface of liquid hydrogen in the tank are tilted with respect to a horizontal plane. In this way, it is possible to reliably direct the hydrogen gas in the hydrogen tank 12 to a first channel 24, a second channel 34, and a third channel 44, which will be described below. Here, although another port is further formed near the top of the hydrogen tank 12, such a port, will not be illustrated. The pump port 64 is a port through which a cylinder of the pump 16 is inserted.

The first port 22 is a port that communicates with the first channel 24 (see FIG. 1). The first channel 24 is a channel that communicates between the hydrogen tank 12 and the outside of the vehicle. A first safety valve 20 is provided in an intermediate portion of this first channel 24. The first safety valve 20 is a valve that is opened when the internal tank pressure Pt exceeds a specified first open reference value Po1 and that is closed when the internal tank pressure Pt becomes equal to or lower than a specified first close reference value Pc1. The first open reference value Po1 is a sufficiently lower value than a maximum allowable pressure Pmax of the hydrogen tank 12, and is approximately 1/5 to 1/2 of the maximum allowable pressure Pmax of the hydrogen tank 12, for example. Such a first open reference value Po1 may be a fixed value that is always constant, or may be a variable value that varies by condition (for example, an outside temperature, a driving state of the vehicle 100, or the like). The first close reference value Pc1 is a value that is equal to or lower than the first open reference value Po1. Thus, the first close reference value Pc1 may be the same value as the first open reference value Po1. By setting Pc1 = Po1, opening/closing control of the first safety valve 20 can be simplified. Alternatively, the first close reference value Pc1 may be a smaller value than the first open reference value Po1. When Pc1 < Po1 is set, and a predetermined range is provided between the first close reference value Pc1 and the first open reference value Po1, it is possible to prevent the first safety valve 20 from being repeatedly opened and closed in a short period of time.

The first safety valve 20 may be an electrically operated valve that is opened/closed when receiving an electrical signal, or may be a mechanical valve that is opened by mechanical deformation caused by application of a specified magnitude of the pressure or higher. In this embodiment, the first safety valve 20 is a solenoid valve that is opened/closed in response to a control signal from the controller 54.

A reaction section 25 is provided on a downstream side of the first safety valve 20. In the reaction section 25, the hydrogen gas flowing through the first channel 24 reacts with air (more precisely, oxygen contained in the air), is converted into water, and is then discharged to the outside of the vehicle. In order to cause this reaction of the hydrogen gas, the reaction section 25 is provided with a catalyst 26, and a fan 28 that blows the air to the catalyst 26. The catalyst 26 triggers the reaction that produces water from hydrogen and oxygen (hereinafter referred to as a "water production reaction"), and an example of the catalyst 26 is copper. When the first safety valve 20 is opened, the fan 28 rotates according to an instruction of the controller 54 and delivers the air to the catalyst 26. Although not illustrated in FIG. 1, the reaction section 25 may further include a heat source that heats at least one of the hydrogen gas and oxygen gas. For example, the heat source may be a heater that generates its own heat, or may be a heat transfer member that transfers heat from another heat source to the reaction section 25. The "other heat source" may include at least one of the hydrogen engine and a fuel cell, for example. Furthermore, the reaction section 25 may have a hydrogen sensor on one or both of an upstream side and a downstream side of the catalyst 26. The hydrogen sensor detects concentration of the hydrogen gas. The controller 54 may adjust a flow rate of the air that is delivered to the catalyst 26 and a heating amount of the hydrogen gas or the oxygen gas on the basis of a detection result by this hydrogen sensor.

Water that is produced in the reaction section 25 is discharged to the outside of the vehicle through the first channel 24. The first channel 24 may be a dedicated channel that is independent of the other channels up to a downstream end thereof, or an intermediate portion of the first channel 24 may be merged with another drainage channel. For example, since the hydrogen engine or the fuel cell outputs water in association with the operation thereof, the vehicle mounted with the hydrogen engine or the fuel cell includes the drainage channel, through which water from the hydrogen engine or the fuel cell is discharged. On a downstream side of the reaction section 25, the first channel 24 may be merged with this drainage channel.

The second port 32 is a port that communicates with the second channel 34 (see FIG. 1). A second safety valve 30 is provided in an intermediate portion of the second channel 34. The second safety valve 30 is a valve that is opened when the internal tank pressure Pt exceeds a specified second open reference value Po2 and that is closed when the internal tank pressure Pt becomes equal to or lower than a second close reference value Pc2. The second open reference value Po2 is a value that is higher than the first open reference value Po1 and that is sufficiently lower than the maximum allowable pressure Pmax of the hydrogen tank 12. For example, the second open reference value Po2 is a value that is about 1.05 to 1.2 times the first open reference value Po1. Such a second open reference value Po2 may be a fixed value that is always constant, or may be a variable value that varies by condition (for example, the outside temperature, the driving state of the vehicle 100, or the like). The second close reference value Pc2 is a value that is equal to or lower than the second open reference value Po2. Thus, Pc2 = Po2 may be set, or Pc2 < Po2 may be set.

The second safety valve 30 may be an electrically operated valve that is opened/closed when receiving an electrical signal, or may be a mechanical valve that is opened by mechanical deformation caused by application of a specified magnitude of the pressure or higher. However, as will be described below, when the second safety valve 30 is opened, the controller 54 actuates an alarm 52. Accordingly, when the second safety valve 30 is the mechanical valve, a sensor is provided to detect an open/closed state of the second safety valve 30. As an example of such a sensor, the hydrogen sensor can be used. The hydrogen sensor detects the concentration of the hydrogen gas on a downstream side of the second safety valve 30.

When the second safety valve 30 is opened, the second channel 34 directs the hydrogen gas to an upper portion or a rear portion of the vehicle 100 via a route that avoids a high-temperature area in the vehicle, and discharges the hydrogen gas in a gaseous state as is to the outside of the vehicle. For example, the high-temperature area is an area around the hydrogen engine. Accordingly, the second channel 34 extends from the hydrogen tank 12 in a direction opposite the hydrogen engine. When the hydrogen gas is discharged from the upper portion of the vehicle 100, the second channel 34 may reach a roof. In this case, the second channel 34 may extend through the inside of a pillar.

The third port 42 is a port that communicates with the third channel 44 (see FIG. 1). A closure member 40 is provided in an intermediate portion of the third channel 44. The closure member 40 closes the third channel 44 to prohibit the hydrogen gas from flowing therethrough. This closure member 40 is mechanically and irreversibly destroyed when the internal tank pressure Pt exceeds a specified third reference value P3. The destruction of the closure member 40 causes the hydrogen gas to be discharged to the outside of the vehicle through the third channel 44.

The third reference value P3 is a value that is higher than the second open reference value Po2 and is lower than the maximum allowable pressure Pmax of the hydrogen tank 12. For example, the third reference value P3 is a value that is about 1.3 to 2 times the first open reference value Po1 or 0.4 to 0.6 times the maximum allowable pressure Pmax of the hydrogen tank 12.

When the closure member 40 is destroyed, the third channel 44 directs the hydrogen gas to the upper portion or the rear portion of the vehicle 100 via the route that avoids the high-temperature area in the vehicle, and discharges the hydrogen gas in the gaseous state as is to the outside of the vehicle. Such a third channel 44 may be a channel that is completely separated from the second channel 34, or may be a channel whose intermediate portion is merged with the second channel 34. In the case where the third channel 44 is merged with the second channel 34, a merged point is located on the downstream side of the second safety valve 30 and on a downstream side of the closure member 40. In addition, similar to the second channel 34, the third channel 44 may extend from the hydrogen tank 12 in the direction opposite the hydrogen engine. The third channel 44 may reach the roof or extend through the inside of the pillar.

The alarm 52 outputs a warning when the second safety valve 30 is opened, so as to urge an occupant to evacuate the vehicle. Such an alarm 52 outputs at least one of sound and light and includes at least one of a speaker, a buzzer, a lamp, and a display, for example.

The controller 54 controls driving of the above-described pump motor 18, the safety valves 20, 30, and the alarm 52. Such a controller 54 is physically a computer that has a processor 56 and memory 58. In FIG. 1, the controller 54 is illustrated as a single computer. However, the controller 54 may be configured by combining two or more mechanically-separated computers. In addition, the controller 54 may be dedicated for the liquid hydrogen storage system 10, or a computer that is used for another type of the control for the vehicle 100 may also be used as the controller 54.

The controller 54 drives the pump motor 18 to supply a required amount of hydrogen to the hydrogen engine side in accordance with a request from a higher-level vehicle controller. The controller 54 also monitors the detection value by the pressure sensor 50; that is, the internal tank pressure Pt. Then, the controller 54 controls opening/closing of the first safety valve 20 and the second safety valve 30 according to the internal tank pressure Pt. Furthermore, when opening the second safety valve 30, the controller 54 operates the alarm 52 to notify the occupant of the vehicle 100 of the warning. The output of this warning continues until the second safety valve 30 is closed. Then, the warning is stopped once the second safety valve 30 is closed.

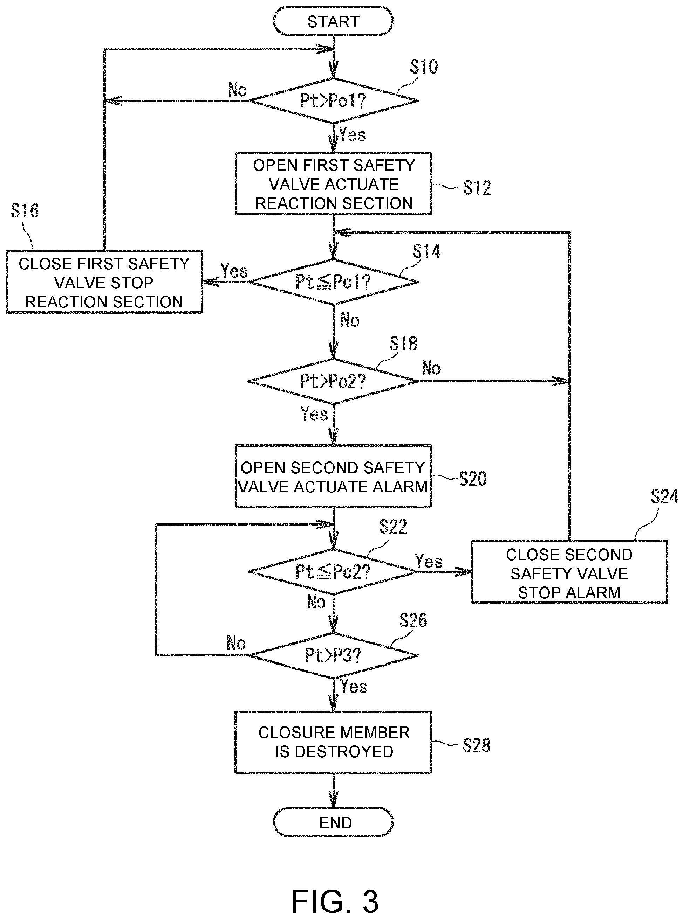

Next, a description will be made on management of the internal tank pressure Pt in this liquid hydrogen storage system 10. FIG. 3 is a flowchart illustrating a management flow of the internal tank pressure Pt of the hydrogen tank 12. In an initial state, the first safety valve 20 and the second safety valve 30 are closed, and the closure member 40 blocks the third channel 44. In the hydrogen tank 12, liquid hydrogen is stored at the pressure that is substantially the same as the atmospheric pressure or slightly higher than the atmospheric pressure. Although the hydrogen tank 12 exerts high heat insulation performance, the hydrogen tank 12 cannot completely block the heat input to the internal space. For this reason, stored liquid hydrogen is gradually vaporized over time. Then, the internal tank pressure Pt is gradually increased with the vaporization of liquid hydrogen.

The controller 54 compares the internal tank pressure Pt, which is detected by the pressure sensor 50, with the first open reference value Po1 (S10). If a comparison result indicates Pt ≤ Po1 (No in S10), the controller 54 maintains the first safety valve 20 in a closed state.

On the other hand, if Pt > Po1 (Yes in S10), the controller 54 opens the first safety valve 20 (S12). By opening the first safety valve 20, the hydrogen gas that is accumulated in the hydrogen tank 12 is discharged to the outside of the hydrogen tank 12 through the first safety valve 20. As a result, the internal tank pressure Pt is reduced. In addition, in the case where the first safety valve 20 is opened, the controller 54 drives the fan 28 in the reaction section 25 to deliver the air to the catalyst 26 (S12). The oxygen gas contained in the air and the hydrogen gas discharged from the hydrogen tank 12 are subjected to a chemical reaction, which converts the hydrogen gas into water. Water produced in the water production reaction in the reaction section 25 is discharged to the outside of the vehicle from the downstream end of the first channel 24. In other words, according to this embodiment, the boil-off gas that is produced in the hydrogen tank 12 has a stable molecular structure (that is, as water molecules) that is safe and has no environmental impact, and is discharged to the outside of the vehicle.

After opening the first safety valve 20, the controller 54 compares the internal tank pressure Pt with the first close reference value Pc1 (S14). If a comparison result indicates Pt ≤ Pc1 (Yes in S14), the controller 54 closes the first safety valve 20 and stops driving the reaction section 25 (S16).

If Pt > Pc1 in step S14, the controller 54 further compares the internal tank pressure Pt with the second open reference value Po2 (S18). If a comparison result indicates Pt ≤ Po2 (No in S18), the controller 54 returns to step S14.

On the other hand, if Pt > Po2 (Yes in S18), the controller 54 further opens the second safety valve 30 (S20). In addition to the first safety valve 20, the second safety valve 30 is also opened. In this way, a larger amount of the hydrogen gas is discharged from the hydrogen tank 12. As a result, it is possible to further reliably prevent the internal tank pressure Pt from exceeding the maximum allowable pressure Pmax of the hydrogen tank 12. In addition, when opening the second safety valve 30, the controller 54 further operates the alarm 52 and notifies the occupant of the warning, so as to urge the occupant to evacuate the vehicle 100 (S20). The occupant is urged to evacuate, just as described. Accordingly, the occupant evacuates the vehicle 100 in response to this warning, and thus safety of the occupant can further reliably be ensured. When the second safety valve 30 is opened, the hydrogen gas is discharged to the outside of the vehicle through the second channel 34. At this time, since the second channel 34 takes the route that avoids the high-temperature area in the vehicle, it is possible to safely discharge the hydrogen gas to the outside of the vehicle.

Thereafter, the controller 54 compares the internal tank pressure Pt with the second close reference value Pc2 (S22). If a comparison result indicates Pt ≤ Pc2 (Yes in S22), the controller 54 closes the second safety valve 30 and stops the alarm 52 (S24). Thereafter, the controller 54 returns to step S 14.

On the other hand, it is assumed that the internal tank pressure Pt continues to be increased even after opening of the second safety valve 30 and exceeds the third reference value P3 (Yes in S26). In this case, the closure member 40 is destroyed (S28). Consequently, the hydrogen gas in the hydrogen tank 12 flows not only into the first channel 24 and the second channel 34 but also into the third channel 44. As a result, the increase in the internal tank pressure Pt is effectively suppressed. Here, since the destruction of the closure member 40 is an irreversible change, use of the liquid hydrogen storage system and boarding of a person in the vehicle 100 become prohibited at a time point at which the closure member 40 is destroyed.

As described above, by virtue of provision of the closure member 40 that is mechanically and automatically destroyed when the internal tank pressure Pt reaches the predetermined third reference value P3, even in the case where electrical failure occurs, for example, even in the case where the pressure sensor 50 fails, the hydrogen gas can reliably be discharged to the outside of the hydrogen tank 12 at the time when the internal tank pressure Pt becomes excessively high. As a result, the safety of the occupant can further reliably be ensured.

Here, in the example illustrated in FIG. 3, presence or absence of the destruction of the closure member 40 is determined on the basis of the internal tank pressure Pt (that is, the detection value by the pressure sensor 50). However, the controller 54 may determine a state of the closure member 40 without relying on the detection value by the pressure sensor 50. According to the invention, in the third channel 44, a hydrogen sensor that detects hydrogen concentration is provided on the downstream side of the closure member 40. Then, in the case where the hydrogen sensor detects the hydrogen concentration that is equal to or higher than a threshold, it may be determined that the closure member 40 has been destroyed. In the case where the closure member 40 is destroyed, the alarm 52 may output the warning regardless of the detection value by the pressure sensor 50. With such a configuration, even in the case where the pressure sensor 50 fails for some reason, it is possible to comprehend an excessive state of the internal tank pressure Pt. Therefore, it is possible to further reliably ensure the safety of the occupant.

As it is apparent from the description so far, according to this embodiment, the boil-off gas, which is produced in the hydrogen tank 12, is converted into water and is then discharged to the outside of the vehicle. With such a configuration, it is possible to prevent the internal tank pressure Pt from becoming excessively high and it is also possible to safely discharge the boil-off gas to the outside of the vehicle. The configuration that has been described so far is merely one example.

## Claims

1. A hydrogen engine vehicle, comprising a hydrogen engine and a liquid hydrogen storage system (10); the liquid hydrogen storage system (10) comprising:
a hydrogen tank (12) that stores liquid hydrogen in the vehicle;
a booster pump (16) configured to pump the liquid hydrogen stored in the hydrogen tank (12) while pressurizing the liquid hydrogen and feed the pressurized liquid hydrogen to the hydrogen engine;
a first channel (24) that communicates between the hydrogen tank (12) and the outside of the vehicle;
a reaction section (25) that causes hydrogen gas flowing through the first channel (24) to react with oxygen for conversion into water and then discharges water to the outside of the vehicle through the first channel (24);
a first safety valve (20) that is provided between the hydrogen tank (12) and the reaction section (25), and is opened at the time when an internal tank pressure (Pt) as an internal pressure of the hydrogen tank (12) exceeds a first open reference value (Po1), so as to discharge the hydrogen gas in the hydrogen tank (12) to the reaction section (25);
a second channel (34) that communicates between the hydrogen tank (12) and the outside of the vehicle;
a second safety valve (30) that is provided in an intermediate portion of the second channel (34), and is opened at the time when the internal tank pressure (Pt) exceeds a second open reference value (Po2), so as to discharge the hydrogen gas in the hydrogen tank (12) to the outside of the vehicle via the second channel (34);
a third channel (44) that communicates between the hydrogen tank (12) and the outside of the vehicle;
a closure member (40) that is provided in an intermediate portion of the third channel (44) to prohibit the hydrogen gas from flowing therethrough, the closure member (40) being destroyed at the time when the internal pressure (Pt) of the hydrogen tank (12) exceeds a third reference value (P3) that is higher than the second open reference value (Po2), so as to allow the hydrogen gas to flow therethrough;
a hydrogen sensor that detects hydrogen concentration, provided on a downstream side of the closure member (40); and
an alarm (52) that outputs a warning when the hydrogen sensor detects a hydrogen concentration that is equal to or higher than a threshold, wherein:
the second channel (34) directs the hydrogen gas to an upper portion or a rear portion of the vehicle via a route that avoids a high-temperature area in the vehicle, and discharges the hydrogen gas in a gaseous state as is to the outside of the vehicle, wherein the high-temperature area is an area around the hydrogen engine, the second channel (34) extends from the hydrogen tank (12) in a direction opposite the hydrogen engine, and the hydrogen gas is discharged from the upper portion of the vehicle;
the third channel (44) directs the hydrogen gas to the upper portion or the rear portion of the vehicle via the route that avoids the high-temperature area in the vehicle, and discharges the hydrogen gas in the gaseous state as is to the outside of the vehicle; and
the second open reference value (Po2) is higher than the first open reference value (Po1); and
the liquid hydrogen stored in the hydrogen tank (12) has a pressure substantially the same as the atmospheric pressure.

2. The hydrogen engine vehicle according to claim 1, wherein
the first safety valve (20) is closed when the internal tank pressure (Pt) becomes equal to or lower than a first close reference value (Pc1), and
the first close reference value (Pc1) is equal to or lower than the first open reference value (Po1).

3. The hydrogen engine vehicle) according to claim 1, wherein
the second safety valve (30) is closed when the internal tank pressure (Pt) becomes equal to or lower than a second close reference value (Pc2), and
the second close reference value (Pc2) is equal to or lower than the second open reference value (Po2).

4. The hydrogen engine vehicle according to claim 1, wherein the liquid hydrogen storage system (10) further comprises:
an alarm (52) that outputs a warning when the second safety valve (30) is opened.

5. The hydrogen engine vehicle according to claim 1, wherein
each of the first channel (24), the second channel (34), and the third channel (44) extends toward the outside of the vehicle from a vicinity of an upper end of the hydrogen tank (12) in a direction of gravity.

6. The hydrogen engine vehicle according to claim 1, wherein
the reaction section (25) includes a heat source that heats at least one of the hydrogen gas and oxygen gas, and
the heat source is a heat transfer member that transfers heat from the hydrogen engine to the reaction section (25).

## Patentansprüche

1. Fahrzeug mit Wasserstoffmotor, umfassend einen Wasserstoffmotor und ein Flüssigwasserstoffspeichersystem (10); wobei das Flüssigwasserstoffspeichersystem (10) umfasst:
einen Wasserstofftank (12), der Flüssigwasserstoff in dem Fahrzeug speichert;
eine Druckerhöhungspumpe (16), die dazu konfiguriert ist, den in dem Wasserstofftank (12) gespeicherten Flüssigwasserstoff zu pumpen, während sie den Flüssigwasserstoff unter Druck setzt und den unter Druck gesetzten Flüssigwasserstoff zu dem Wasserstoffmotor zuführt;
einen ersten Kanal (24), der eine Verbindung zwischen dem Wasserstofftank (12) und der Außenseite des Fahrzeugs herstellt;
einen Reaktionsbereich (25), der bewirkt, dass durch den ersten Kanal strömendes Wasserstoffgas (24) mit Sauerstoff für die Umwandlung in Wasser reagiert und dann Wasser durch den ersten Kanal (24) zu der Außenseite des Fahrzeugs abgibt;
ein erstes Sicherheitsventil (20), das zwischen dem Wasserstofftank (12) und dem Reaktionsbereich (25) bereitgestellt ist und zu dem Zeitpunkt geöffnet wird, wenn ein innerer Tankdruck (Pt) als ein innerer Druck des Wasserstofftanks (12) einen ersten offenen Referenzwert (Po1) überschreitet, um das Wasserstoffgas in dem Wasserstofftank (12) in den Reaktionsbereich (25) abzugeben;
einen zweiten Kanal (34), der eine Verbindung zwischen dem Wasserstofftank (12) und der Außenseite des Fahrzeugs herstellt;
ein zweites Sicherheitsventil (30), das in einem Zwischenabschnitt des zweiten Kanals (34) bereitgestellt ist und zu dem Zeitpunkt geöffnet wird, wenn ein innerer Tankdruck (Pt) einen zweiten offenen Referenzwert (Po2) überschreitet, um das Wasserstoffgas in dem Wasserstofftank (12) an die Außenseite des Fahrzeugs über den zweiten Kanal (34) abzugeben;
einen dritten Kanal (44), der eine Verbindung zwischen dem Wasserstofftank (12) und der Außenseite des Fahrzeugs herstellt;
ein Verschlusselement (40), das in einem Zwischenabschnitt des dritten Kanals (44) bereitgestellt ist, um zu verhindern, dass Wasserstoffgas dahindurch strömt, wobei das Verschlusselement (40) zu dem Zeitpunkt zerstört wird, zu dem der innere Tankdruck (Pt) des Wasserstofftanks (12) einen dritten Referenzwert (P3) überschreitet, der höher ist als der zweite offene Referenzwert (Po2), um zu ermöglichen, dass Wasserstoffgas dahindurch strömt;
einen Wasserstoffsensor, der die Wasserstoffkonzentration erkennt und an einer stromabwärts gelegenen Seite des Verschlusselements (40) bereitgestellt wird; und
einen Alarm (52), der eine Warnung ausgibt, wenn der Wasserstoffsensor eine Wasserstoffkonzentration erkennt, die gleich oder höher als eine Schwelle ist, wobei:
der zweite Kanal (34) das Wasserstoffgas zu einem oberen Abschnitt oder einem hinteren Abschnitt des Fahrzeugs über einen Weg leitet, der eine Hochtemperaturfläche in dem Fahrzeug vermeidet, und das Wasserstoffgas in einem gasförmigen Zustand wie es ist an die Außenseite des Fahrzeugs abgibt, wobei die Hochtemperaturfläche eine Fläche um den Wasserstoffmotor herum ist, sich der zweite Kanal (34) von dem Wasserstofftank (12) in einer Richtung gegenüber dem Wasserstoffmotor erstreckt, und das Wasserstoffgas aus dem oberen Abschnitt des Fahrzeugs abgegeben wird;
der dritte Kanal (44) das Wasserstoffgas zu dem oberen Abschnitt oder zu dem hinteren Abschnitt des Fahrzeugs über den Weg leitet, der die Hochtemperaturfläche in dem Fahrzeug vermeidet, und das Wasserstoffgas in dem gasförmigen Zustand wie es ist an die Außenseite des Fahrzeugs abgibt; und
der zweite offene Referenzwert (Po2) höher ist als der erste offene Referenzwert (Po1); und
der in dem Wasserstofftank (12) gespeicherte Flüssigwasserstoff einen Druck aufweist, der im Wesentlichen gleich dem atmosphärischen Druck ist.

2. Fahrzeug mit Wasserstoffmotor nach Anspruch 1, wobei
das erste Sicherheitsventil (20) geschlossen wird, wenn der innere Tankdruck (Pt) gleich oder niedriger wird als ein erster Schließreferenzwert (Pc1) wird, und
der erste geschlossener Referenzwert (Pc1) gleich oder niedriger als der erste offene Referenzwert (Po1) ist.

3. Fahrzeug mit Wasserstoffmotor nach Anspruch 1, wobei
das zweite Sicherheitsventil (30) geschlossen wird, wenn der innere Tankdruck (Pt) gleich oder niedriger wird als ein zweiter geschlossener Referenzdruck (Pc2), und
der zweite geschlossener Referenzwert (Pc2) gleich oder niedriger als der zweite offene Referenzwert (Po2) ist.

4. Fahrzeug mit Wasserstoffmotor nach Anspruch 1, wobei das Flüssigwasserstoffspeichersystem (10) ferner umfasst:
einen Alarm (52), der eine Warnung ausgibt, wenn das zweite Sicherheitsventil (30) geöffnet wird.

5. Fahrzeug mit Wasserstoffmotor nach Anspruch 1, wobei
jeder des ersten Kanals (24), des zweiten Kanals (34) und des dritten Kanals (44) sich in Richtung der Außenseite des Fahrzeugs aus der Nähe eines oberen Endes des Wasserstofftanks (12) in einer Schwerkraftrichtung erstreckt.

6. Fahrzeug mit Wasserstoffmotor nach Anspruch 1, wobei
der Reaktionsbereich (25) eine Wärmequelle beinhaltet, die wenigstens eines des Wasserstoffgases und des Sauerstoffgases erwärmt, und
die Wärmequelle ein Wärmeübertragungselement ist, das die Wärme von dem Wasserstoffmotor auf den Reaktionsbereich (25) überträgt.

## Revendications

1. Véhicule à moteur à combustion hydrogène, comprenant un moteur à combustion hydrogène et un système de stockage d'hydrogène liquide (10) ; le système de stockage d'hydrogène liquide (10) comprenant :
un réservoir d'hydrogène (12) qui stocke de l'hydrogène liquide dans le véhicule ;
une pompe de suralimentation (16) configurée pour pomper l'hydrogène liquide stocké dans le réservoir d'hydrogène (12) tout en mettant sous pression l'hydrogène liquide et effectuer l'alimentation en l'hydrogène liquide mis sous pression au moteur à combustion hydrogène ;
un premier canal (24) qui effectue la communication entre le réservoir d'hydrogène (12) et l'extérieur du véhicule ;
une section à réaction (25) qui amène un gaz d'hydrogène s'écoulant à travers le premier canal (24) à réagir avec de l'oxygène pour la conversion en eau et puis évacue de l'eau vers l'extérieur du véhicule à travers le premier canal (24) ;
une première soupape de sécurité (20) qui est prévue entre le réservoir d'hydrogène (12) et la section à réaction (25), et est ouverte à l'instant auquel une pression de réservoir interne (Pt), en tant que pression interne du réservoir d'hydrogène (12), dépasse une première valeur de référence ouverte (Po1), afin d'évacuer le gaz d'hydrogène dans le réservoir d'hydrogène (12) vers la section à réaction (25) ;
un deuxième canal (34) qui effectue la communication entre le réservoir d'hydrogène (12) et l'extérieur du véhicule ;
une seconde soupape de sécurité (30) qui est prévue dans une partie intermédiaire du deuxième canal (34), et est ouverte à l'instant auquel la pression de réservoir interne (Pt) dépasse une deuxième valeur de référence ouverte (Po2), afin d'évacuer le gaz d'hydrogène dans le réservoir d'hydrogène (12) vers l'extérieur du véhicule par l'intermédiaire du deuxième canal (34) ;
un troisième canal (44) qui effectue la communication entre le réservoir d'hydrogène (12) et l'extérieur du véhicule ;
un élément de fermeture (40) qui est prévu dans une partie intermédiaire du troisième canal (44) pour empêcher le gaz d'hydrogène de s'écouler à travers celui-ci, l'élément de fermeture (40) étant détruit à l'instant auquel la pression interne (Pt) du réservoir d'hydrogène (12) dépasse une troisième valeur de référence (P3) qui est plus haute que la deuxième valeur de référence ouverte (Po2), afin de permettre au gaz d'hydrogène de s'écouler à travers celui-ci ;
un capteur d'hydrogène qui détecte une concentration en hydrogène, prévu sur un côté aval de l'élément de fermeture (40) ; et
une alarme (52) qui produit en sortie un avertissement lorsque le capteur d'hydrogène détecte une concentration en hydrogène qui est égale à un seuil, ou plus haute que celui-ci, dans lequel :
le deuxième canal (34) dirige le gaz d'hydrogène vers une partie supérieure ou une partie arrière du véhicule par l'intermédiaire d'un trajet qui évite une zone de haute température dans le véhicule, et évacue le gaz d'hydrogène dans un état gazeux, tel qu'il est, vers l'extérieur du véhicule, dans lequel la zone de haute température est une zone autour du moteur à combustion hydrogène, le deuxième canal (34) s'étend depuis le réservoir d'hydrogène (12) dans une direction opposée au moteur à combustion hydrogène, et le gaz d'hydrogène est évacué depuis la partie supérieure du véhicule ;
le troisième canal (44) dirige le gaz d'hydrogène vers la partie supérieure ou la partie arrière du véhicule par l'intermédiaire du trajet qui évite la zone de haute température dans le véhicule, et évacue le gaz d'hydrogène dans l'état gazeux, tel qu'il est, vers l'extérieur du véhicule ; et
la deuxième valeur de référence ouverte (Po2) est plus haute que la première valeur de référence ouverte (Po1) ; et
l'hydrogène liquide stocké dans le réservoir d'hydrogène (12) a une pression sensiblement identique à la pression atmosphérique.

2. Véhicule à moteur à combustion hydrogène selon la revendication 1, dans lequel
la première soupape de sécurité (20) est fermée lorsque la pression de réservoir interne (Pt) devient égale à une première valeur de référence fermée (Pc1), ou plus basse que celle-ci, et
la première valeur de référence fermée (Pc1) est égale à la première valeur de référence ouverte (Po1), ou plus basse que celle-ci.

3. Véhicule à moteur à combustion hydrogène selon la revendication 1, dans lequel
la seconde soupape de sécurité (30) est fermée lorsque la pression de réservoir interne (Pt) devient égale à une seconde valeur de référence fermée (Pc2), ou plus basse que celle-ci, et
la seconde valeur de référence fermée (Pc2) est égale à la deuxième valeur de référence ouverte (Po2), ou plus basse que celle-ci.

4. Véhicule à moteur à combustion hydrogène selon la revendication 1, dans lequel le système de stockage d'hydrogène liquide (10) comprend en outre :
une alarme (52) qui produit en sortie un avertissement lorsque la seconde soupape de sécurité (30) est ouverte.

5. Véhicule à moteur à combustion hydrogène selon la revendication 1, dans lequel
chacun du premier canal (24), du deuxième canal (34), et du troisième canal (44) s'étend vers l'extérieur du véhicule depuis un voisinage d'une extrémité supérieure du réservoir d'hydrogène (12) dans une direction de gravité.

6. Véhicule à moteur à combustion hydrogène selon la revendication 1, dans lequel
la section à réaction (25) inclut une source de chaleur qui chauffe au moins un du gaz d'hydrogène et du gaz d'oxygène, et
la source de chaleur est un élément de transfert de chaleur qui transfère de la chaleur depuis le moteur à combustion hydrogène à la section à réaction (25).
